(19) Europäisches Patentamt
European Patent Office
Office européen des brevets

(11) **EP 2 382 255 B1**

(12) **EUROPÄISCHE PATENTSCHRIFT**

(45) Veröffentlichungstag und Bekanntmachung des Hinweises auf die Patenterteilung:
**18.07.2018 Patentblatt 2018/29**

(21) Anmeldenummer: **09775204.2**

(22) Anmeldetag: **16.12.2009**

(51) Int Cl.:
*C08G 18/66* (2006.01)      *C08G 18/08* (2006.01)
*C08G 18/48* (2006.01)      *C08G 18/75* (2006.01)
*G02B 6/02* (2006.01)      *G02B 1/04* (2006.01)
*C08G 18/32* (2006.01)

(86) Internationale Anmeldenummer:
**PCT/EP2009/067308**

(87) Internationale Veröffentlichungsnummer:
**WO 2010/076224 (08.07.2010 Gazette 2010/27)**

(54) **LICHTLEITER AUS THERMOPLASTISCHEN POLYURETHANEN**

LIGHT GUIDES MADE OF THERMOPLASTIC POLYURETHANES

GUIDE D'ONDES LUMINEUSES À BASE DE POLYURÉTHANES THERMOPLASTIQUES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **29.12.2008 EP 08173022**

(43) Veröffentlichungstag der Anmeldung:
**02.11.2011 Patentblatt 2011/44**

(73) Patentinhaber: **BASF SE**
**67056 Ludwigshafen am Rhein (DE)**

(72) Erfinder:
• **PRISSOK, Frank**
**49448 Lemförde (DE)**
• **DUWENHORST, Jörn**
**49448 Lemförde (DE)**
• **HENZE, Oliver Steffen**
**49401 Damme (DE)**
• **MÜHREN, Oliver**
**49080 Osnabrück (DE)**

(74) Vertreter: **BASF IP Association**
**BASF SE**
**G-FLP-C006**
**67056 Ludwigshafen (DE)**

(56) Entgegenhaltungen:
EP-A- 1 197 505      EP-A- 2 036 933
EP-A1- 0 603 675      EP-A1- 1 302 491
EP-A2- 1 090 940      US-A- 3 620 905
US-A- 4 621 113      US-A- 4 915 473

**Beschreibung**

Die Erfindung betrifft für die Herstellung von Lichtleitern geeignete thermoplastische Polyurethane (im Folgenden TPU), ein Verfahren zu ihrer Herstellung sowie Lichtleiter auf Basis TPU.

Es ist bereits bekannt, optische Wellenleiter zur Übertragung großer Datenmengen zu verwenden, wobei die Datenübertragung störungsfrei, das heißt nicht durch elektromagnetische Felder beeinflussbar ist. Bekannt sind Lichtleiter aus Glasfasern, aber auch Lichtleiter aus Kunststoff. Letztere sind insbesondere bekannt aus dem Bereich des Maschinenbaus, des Automobilbaus und im Bürobereich. Derartige als auch "polymere optische Fasern" bezeichneten Lichtleiter können einen optischen Kern aus dem das Licht übertragenden Polymeren, einen optischen Mantel und eine Schutzumhüllung aufweisen. Technisch hauptsächlich benutzte Polymere für den Kern sind zum Beispiel Polymethylmethacrylat und für den Mantel zum Beispiel Fluorpolymere wie Polyvinylidenfluorid oder Polytetrafluorethylen.

Aus der US-A-4 836 646 ist bereits bekannt, spezielle Schutzschichten ("Cladding") zu verwenden, wobei hinsichtlich des optischen Kerns pauschal auf Polystyrol, Polymethylmethacrylat, Polycarbonat, Polyurethan oder Copolymere von Styrol und Methylmethacrylat, Styrol und Methylacrylat, Methylmethacrylat und Ethylacrylat, Styrol und Alphamethylstyrol, oder Styrol und Vinyltoluol hingewiesen wird. Aus US 2008/0117639 A1 sind lichtleitende Platten mit einem lichtkondensierenden Effekt bekannt, die das Licht beim Durchlauf verändern. Hierzu sollen als Kunststoffe TPU, PC, Silicone, PMMA oder PET verwendet werden.

Aus WO 94/09048 A1 sind bereits glasige, quervernetzte Polyurethane und Polyurethan-Netzwerke bekannt, die für biomedizinische Anwendungen verwendbar sind, beispielsweise optische Fasern. Hierbei sollen die Hydroxylgruppen und die Isocyanatgruppen stöchiometrisch eingesetzt werden und die Polyole niedrigmolekular sein.

Die US 4,915,473 offenbart eine Vorrichtung bei der die sich ändernde Lichtdurchlässigkeit eines Polymers zur Druckbestimmung ausgenutzt wird. Die EP 1 197 505 A1. In der EP 1 197505 werden Materialien für optische Linse, die sehr resistent gegen mechanische Beanspruchung und Verfärbung sind, auf der Basis von Polyurethanen offenbart. Auch die US 3,620,905 offenbart eine sehr spezielle Polyurethanmischung, die besonders geeignet für die Herstellung von dünnen transparenten Folien, wie sie bei der Herstellung von Sicherheitsgläsern Verwendung findet.

Die bekannten Lichtleitermaterialien auf Basis flexibler, elastischer und hochtransparenter Kunststoffe gewährleisten aber noch nicht eine ausreichende Lichtübertragung für Sende-/Empfangseinrichtungen bei Längen von größer als 3 m. Weiterhin sind lichtleitende Kunststoffe wie Polymethylmethacrylat zu steif und spröde für flexible Verbindungen und mineralische Lichtleiter mit Glasfasern sind für enge Biegeradien ungeeignet. Die bekannten Lichtleiter weisen zu hohe Absorptionsverluste bzw. ungenügende mechanische Eigenschaften auf.

Der Erfindung lag die Aufgabe zugrunde, verbesserte Lichtleiter zur Verfügung zu stellen, die flexibel, elastisch und hochtransparent sind und eine ausreichende Lichtübertragung auch bei größeren Längen gewährleisten.

Gegenstand der Erfindung ist ein Lichtleiter auf Basis eines lichtleitenden thermoplastischen Polyurethans, erhältlich aus

A) einem Diisocyanat
B) einem Polyol
C) einem Isocyanat-reaktiven Kettenverlängerer, dadurch gekennzeichnet, dass in dem thermoplastischen Polyurethan

a) der Gehalt an Aromaten und konjugierten $\pi$-Elektronen-Systemen maximal 40 Gew.-%, vorzugsweise maximal 25 Gew.-%, besonders bevorzugt maximal 10 Gew.-%, bezogen auf das thermoplastische Polyurethan inklusive gegebenenfalls anwesender Additive beträgt

b) der Brechungsindex des thermoplastischen Polyurethans mindestens 1,50, vorzugsweise mindestens 1,52 beträgt und

c) die Gesamtopazität kleiner als 10 %, vorzugsweise kleiner als 7 % beträgt. wobei das Diisocyanat A) 1-Isocyanato-4-[(4-isocyanatocyclohexyl)-methyl]-cyclohexan ist, das Polyol ein Polytetrahydrofuran mit einem zahlenmittleren Molekulargewicht von 600 g/mol bis 2000 g/mol und der Kettenverlängerer Propan-1,3,-diol und/oder Butan-1,4-diol ist.

Der Gehalt an Aromaten und konjugierten $\pi$-Elektronen-Systemen unter a) bezieht sich auf das Gewicht der Aromaten (ohne Wasserstoff H), ungesättigte Kohlenstoffe und Heteroatome, die Teil des $\pi$-Elektronen-Systems sind, wobei Sauerstoffatome nicht mitgezählt werden.

Der Brechungsindex wird bestimmt bei einer Temperatur von 20 °C, die Gesamtopazität vorzugsweise nach den in den Beispielen angegebenen Verfahren. Bevorzugt wird der Brechungsindex an einem Probekörper mit einer gleichmäßigen Schichtdick von 2 mm gemessen, der durch Ausgießen des flüssigen lichtleitenden thermoplastischen Polyurethans auf eine ebene, horizontal ausgerichtete glatte Fläche hergestellt wurde, die im weiteren auch als Spritzgussplatte bezeichnet wird. Aus dieser Ausgussplatte werden dann Probekörper geeigneter Größe ausgestanzt oder ausgeschnitten. Gegenstand der Erfindung ist weiterhin die Verwendung der erfindungsgemäßen TPU als lichtleitendes Element in Lichtleitern, insbesondere in Fasern.

Ein weiterer Gegenstand der Erfindung ist ein Verfahren zur Herstellung von Lichtleitern, dadurch gekennzeichnet, dass ein erfindungsgemäßes TPU als lichtleitendes Material, insbesondere in Fasern und Schläuchen, verwendet wird.

Ein weiterer Gegenstand der Erfindung ist ein Verfahren zur Herstellung erfindungsgemäßer TPU, dadurch gekennzeichnet, dass wenigstens ein organisches Diisocyanat A), wenigstens ein vorzugsweise lineares, Hydroxyl-terminiertes Polyol B und wenigstens ein kurzkettiger Kettenverlängerer auf Basis eines Diols zur Reaktion gebracht werden, dadurch gekennzeichnet, dass

- das Äquivalenzverhältnis von NCO-Gruppen zur Summe der Isocyanat-reaktiven Gruppen 0,9 : 1,0 bis 1,2 : 1,0, vorzugsweise 0,95 : 1,0 bis 1,10 : 1,0 beträgt
- keine Streuzentren eingetragen werden
- keine oder im Wesentlichen keine UV- und/oder VIS-Strahlung absorbierenden Zusätze eingetragen werden.

Weitere Ausführungsformen der vorliegenden Erfindung sind den Ansprüchen, der Beschreibung und den Beispielen zu entnehmen. Es versteht sich, dass die vorstehend genannten und die nachstehend erläuterten Merkmale des erfindungsgemäßen Gegenstandes/Verfahren/Verwendungen nicht nur in der jeweils angegebenen Kombination, sondern auch in anderen Kombinationen verwendbar sind, ohne den Rahmen der Erfindung zu verlassen

Unter thermoplastischen Polyurethanen TPU werden Polyurethane verstanden, die in einem bestimmten Temperaturbereich wiederholt in der Wärme erweichbar sind und beim Kühlen erhärten und im erweichten Zustand wiederholt durch Gießen als Formteil, Extrudat oder Umformteil zu Halbzeug oder Gegenständen formbar sind. Bei den TPU handelt es sich um Blockcopolymere; diese besitzen innerhalb eines Moleküls Hart- und Weichsegmente. In einer bevorzugten Ausführungsform beträgt der Anteil der Hartphase am gesamten TPU vorzugsweise von 15 bis 65 Gew.-%, insbesondere 40 bis 65 Gew.-% bei aliphatischem TPU, wobei der Hartphasenanteil durch folgende Formel definiert ist:

$$Hartphasenanteil = \{\sum_{x=1}^{k}[(m_{KVx} / M_{KVx})^* M_{Iso} + m_{KVx}]\} / m_{ges}$$

mit den folgenden Bedeutungen:

$M_{KVx}$: Molare Masse der Kettenverlängerers x in g/mol
$m_{KVx}$: Masse des Kettenverlängerers x in g
$M_{Iso}$: Molare Masse des verwendeten Isocyanates in g/mol
$m_{ges}$: Gesamtmasse aller Ausgangsstoffe in g
k: Anzahl der Kettenverlängerer.

Weiterhin werden vorzugsweise keine Additive mit einer merklichen Absorption oder Streuung, wie sie durch Streuzentren hervorgerufen werden, im Bereich von ca. 280 nm bis 800 nm verwendet.

Keine merkliche Absorption heißt im Zusammenhang mit dieser Erfindung, dass die Transmission einer 2mm Spritzgussplatte im Bereich von 280 nm bis 800 nm größer als 80%, bevorzugt größer als 85% ist, weiter bevorzugt größer als 90 % und besonders bevorzugt größer als 95% ist.

Als Streuzentrum wird im Zusammenhang mit dieser Erfindung jedes Teilchen verstanden, das zu einer Streuung des Lichtes bei der verwendeten Wellenlänge senkrecht zur eingestrahlten Richtung führt. In Abhängigkeit der Wellenlänge des in das transparente TPU eingestrahlten Lichtes kommt es zu Lichtstreuung, wenn die Streuzentren eine maximale Ausdehnung von 4/2, bevorzug 1/1, weiter bevorzugt bei ½ besonders bevorzugt bei ¼ der Wellenlänge des eingesetzten Lichtes haben.

Dementsprechend werden als Streuzentren solche Teilchen bezeichnet, die in ihrer längsten räumlichen Ausdehnung kleiner als bei 4/2, bevorzug 1/1, weiter bevorzugt ½ besonders bevorzugt ¼ der Wellenlänge des in den Lichtleiter eingestrahlten Lichtes haben.

Ganz besonders bevorzugt werden unter Streuzentren Teilchen verstanden, die in ihrem größten Durchmesser eine räumliche Ausdehnung von mehr als 0,7 µm, bevorzugt mehr als 0,6 µm besonders bevorzugt mehr als 0,5 µm haben.

Erfindungsgemäß erfolgt die Herstellung der thermoplastischen Polyurethane durch Umsetzung von Isocyanat A mit Polyol B und gegebenenfalls weiteren gegenüber Isocyanaten reaktiven Verbindungen und Kettenverlängerungsmitteln C gegebenenfalls in Gegenwart von Katalysatoren D und/oder üblichen Hilfsstoffen E.

Die bei der Herstellung der Polyurethane üblicherweise verwendeten Komponenten A, B, C sowie gegebenenfalls D und/oder E sollen im Folgenden beispielhaft beschrieben werden:

a) Als organische Isocyanate A können allgemein bekannte aromatische, aliphatische, cycloaliphatische und/oder araliphatische Isocyanate, bevorzugt Diisocyanate eingesetzt werden, beispielsweise 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), Diphenylmethandiisocyanat, 3,3'-Dimethyl-diphenyldiisocyanat, 1,2-Diphenylethandiisocyanat und/oder Phenylendiisocyanat, Tri-, Tetra-, Penta-, Hexa-, Hepta- und/oder Oktamethylendiisocyanat, 2-Methylpentamethylen-diisocyanat-1,5, 2-Ethyl-butylen-diisocyanat-1,4, Pentamethylen-diisocyanat-1,5, Butylen-diisocyanat-1,4, 1-Isocyana-to-3,3,5-trimethyl-5-isocyanatomethyl-cyclohexan (Isophoron-diisocyanat, IPDI), 1-Isocyanato-4-[(4-isocyanatocyclohexyl) methyl]cyclohexan (H12MDI), 2,6-Diisocyanatohexancarbonsäureester, 1,4- und/oder 1,3-Bis(isocyanatomethyl)cyclohexan (HXDI), 1,4-Cyclohexan-diisocyanat, 1-Methyl-2,4- und/oder -2,6-cyclohexan-diisocyanat und/oder 4,4'-, 2,4'- und 2,2'-Dicyclohexylmethan-diisocyanat, bevorzugt 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), Hexamethylendiisocyanat, 1-Isocyanato-4-[(4-isocyanatocyclohexyl)methyl]cyclohexan, und/oder IPDI.

Besonders bevorzugte Isocyanate sind aliphatische Isocyanate, z.B. Hexamethylendiisocyanat und erfindungsgemäß H12MDI.

b) Als gegenüber Isocyanaten reaktive Verbindungen (b) können die allgemein bekannten gegenüber Isocyanaten reaktiven Verbindungen eingesetzt werden, beispielsweise Polyesterole, Polyetherole und/oder Polycarbonatdiole, die üblicherweise auch unter dem Begriff "Polyole" zusammengefasst werden, mit zahlenmittleren Molekulargewichten (Mn) zwischen 500 g/mol und 8000 g/mol, bevorzugt 600 g/mol bis 6000 g/mol, insbesondere 800 g/mol bis weniger als 3000 g/mol, und bevorzugt einer mittleren Funktionalität gegenüber Isocyanaten von 1,8 bis 2,3, bevorzugt 1,9 bis 2,2, insbesondere 2.

Bevorzugt setzt man Polyetherpolyole ein, beispielsweise solche auf der Basis von allgemein bekannten Startersubstanzen und üblichen Alkylenoxiden, beispielsweise Ethylenoxid, Propylenoxid und/oder Butylenoxid, bevorzugt Polyetherole basierend auf Propylenoxid-1 ,2 und Ethylenoxid und insbesondere Polyoxytetramethylenglykole. Weiterhin können als Polyetherole sogenannte niedrig ungesättigte Polyetherole verwendet werden. Unter niedrig ungesättigten Polyolen werden im Rahmen dieser Erfindung insbesondere Polyetheralkohole mit einem Gehalt an ungesättigten Verbindungen von kleiner als 0,02 meq/g, bevorzugt kleiner als 0,01 meq/g, verstanden. Derartige Polyetheralkohole werden zumeist durch Anlagerung von Alkylenoxiden, insbesondere Ethylenoxid, Propylenoxid und Mischungen daraus, an die oben beschriebenen Diole oder Triole in Gegenwart von hochaktiven Katalysatoren hergestellt.

Derartige hochaktive Katalysatoren sind beispielsweise Cäsiumhydroxid und Multimetallcyanidkatalysatoren, auch als DMC-Katalysatoren bezeichnet. Ein häufig eingesetzter DMC-Katalysator ist das Zinkhexacyanocobaltat. Der DMC-Katalysator kann nach der Umsetzung im Polyetheralkohol belassen werden, üblicherweise wird er entfernt, beispielsweise durch Sedimentation oder Filtration.

Statt eines Polyols können auch Mischungen verschiedener Polyole eingesetzt werden. Das erfindungsgemäße thermoplastische Polyurethan basiert auf Polytetrahydrofuran mit einem zahlenmittleren Molekulargewicht (Mn) zwischen 600 g/mol und 2000 g/mol, bevorzugt 800 g/mol und 1400 g/mol, besonders bevorzugt 950 g/mol und 1050 g/mol als Komponente (b).

c) Als Kettenverlängerungsmittel C können allgemein bekannte aliphatische, araliphatische, aromatische und/oder cycloaliphatische Verbindungen mit einem zahlenmitlleren Molekulargewicht von 50 g/mol bis 499 g/mol, bevorzugt 2-funktionelle Verbindungen, eingesetzt werden, beispielsweise Alkandiole mit 2 bis 10 C-Atomen im Alkylenrest, bevorzugt Butandiol-1,4, Hexandiol-1,6 und/oder Di-, Tri-, Tetra-, Penta-, Hexa-, Hepta-, Okta-, Nona- und/oder Dekaalkylenglykole mit 3 bis 8 Kohlenstoffatomen, bevorzugt unverzweigte Alkandiole. Kettenverlängerer im Sinne der Erfindung sind Propan-1,3-diol und/oder Butan-1,4-diol und insbesondere 1,4-Butandiol.

d) Geeignete Katalysatoren D, welche insbesondere die Reaktion zwischen den NCO-Gruppen der Diisocyanate A und der Komponente B beschleunigen, sind die nach dem Stand der Technik bekannten und üblichen tertiären Amine, wie z. B. Triethylamin, Dimethylcyclohexylamin, N-Methylmorpholin, N,N'-Dimethyl-piperazin, 2-(Dimethylaminoethoxy)-ethanol, Diazabicyclo-(2,2,2)-octan und ähnliche sowie insbesondere organische Metallverbindungen wie Titansäureester, Eisenverbindungen bevorzugt Eisen-(III)- acetylacetonat, Zinnverbindungen, bevorzugt Zinndiacetat, Zinndioctoat, Zinndilaurat oder in einer anderen bevorzugten Ausführungsform die Zinndialkylsalze aliphatischer Carbonsäuren , weiter bevorzugt Dibutylzinndiacetat, Dibutylzinndilaurat oder ähnliche. Die Katalysatoren werden üblicherweise in Mengen von 0,00001 bis 0,1 Gew.-Teilen pro 100 Gew.-Teile Polyhydroxylverbindung (b) eingesetzt.

e) Neben Katalysatoren D können den Aufbaukomponenten A bis C auch übliche Hilfsmittel E hinzugefügt werden. Genannt seien beispielsweise Treibmittel, oberflächenaktive Substanzen, Flammschutzmittel, Keimbildungsmittel, Gleit- und Entformungshilfen, Farbstoffe und Pigmente, Stabilisatoren, z. B. gegen Hydrolyse, Licht, Hitze oder Verfärbung, anorganische und/oder organische Füllstoffe, Verstärkungsmittel, Weichmacher und Metalldeaktivatoren. Als Hydrolyseschutzmittel werden bevorzugt oligomere und/oder polymere aliphatische oder aromatische Carbodiimide verwendet.

In einer bevorzugten Ausführungsform werden aber derartige Hilfsmittel nur in einer Menge von vorzugsweise maximal 1 Gew.-%, insbesondere von maximal 0,1 Gew. %, bezogen auf das Gesamtgewicht des thermoplastischen Polyurethans inklusive der Additive verwendet. In einer besonders bevorzugten Ausführungsform werden keine dieser Hilfsmittel verwendet.

Besonders bevorzugt sind TPU auf Basis von hydriertem MDI und wenigstens eines Polyetherols mit einem maximalen Anteil von 25 Gew.-%, bevorzugt maximal 10 Gew.-% an Aromaten und konjugierten $\pi$-Elektronen-Systemen, bezogen auf das thermoplastische Polyurethan inklusive gegebenenfalls anwesender Additive, insbesondere TPU unter Ausschluss aromatischer Verbindungen.

Unter Ausschluss aromatischer Verbindung wird verstanden, dass im Lichtlängenwellenbereich von 0,25 $\mu$m bis 0,35 $\mu$m ein Probekörper aus einer Spritzgussplatte von 2 mm Dicke eine Transmission von mehr als 30%, weiter bevorzugt mehr als.50% und besonders bevorzugt mehr als 70% aufweist.

Die Herstellung der TPU kann nach den bekannten Verfahren diskontinuierlich oder kontinuierlich, beispielsweise mit Reaktionsextrudern oder dem Bandverfahren nach one-shot oder dem Prepolymerverfahren, bevorzugt nach dem one-shot-Verfahren erfolgen. Bei diesen Verfahren können die zur Reaktion kommenden Komponenten A, B und gegebenenfalls C, D und/oder E nacheinander oder gleichzeitig miteinander vermischt werden, wobei die Reaktion unmittelbar einsetzt. Beim Extruderverfahren werden die Aufbaukomponenten A, B sowie gegebenenfalls C, D und/oder E einzeln oder als Gemisch in den Extruder eingeführt, bevorzugt bei Temperaturen von 100 C bis 280 °C, weiter bevorzugt bei 140 °C bis 250 °C zur Reaktion gebracht, das erhaltene thermoplastische Polyurethan wird extrudiert, abgekühlt und granuliert.

Zur Optimierung der TPU können die Polyolkomponente B und Kettenverlängerer C variiert werden. In einer bevorzugten Ausführungsform wird ein Gewichtsverhältnis von Polyol B zu insgesamt einzusetzenden Kettenverlängerungsmitteln C von 20 bis 2, insbesondere von 8 bis 3 eingestellt.

Die Umsetzung des Isocyanates A mit den Isocyanat-reaktiven Komponenten erfolgt in einer bevorzugten Ausführungsform bei einer Kennzahl zwischen 950 und 1050, besonders bevorzugt zwischen 970 und 1010, insbesondere zwischen 980 und 1000. Hierbei ist die Kennzahl definiert durch das Verhältnis der insgesamt bei der Umsetzung eingesetzten Isocyanatgruppen der Komponente A zu den Isocyanat-reaktiven Gruppen, also insbesondere den Gruppen B und C. Bei einer Kennzahl von 1000 kommt auf eine Isocyanatgruppe der Komponente A ein aktives Wasserstoffatom. Bei Kennzahlen über 1000 liegen mehr Isocyanatgruppen als OH-Gruppen vor.

Die erfindungsgemäßen lichtleitenden TPU können direkt zur Herstellung von Strängen, Schläuchen oder Fasern ausgezogen werden, die zur Lichtleitung eingesetzt werden. In einer bevorzugten Ausführungsform werden die erfindungsgemäßen TPU in Kombinationsleitern verwendet, die als optische Leiter das erfindungsgemäße TPU aufweisen, welche vorzugsweise zur Verbesserung der Totalreflexion im optischen Leiter mit einer weiteren Schicht (Cladding-Schicht) versehen sind. In einer weiter bevorzugten Ausführungsform kann die Cladding-Schicht mit einer äußeren Schicht zum Schutz vor mechanischen Beschädigungen umgeben sein.

Die Cladding Schicht ist eine zusätzliche Schicht auf einem Lichtleiter im vorliegenden Fall thermoplastischem Polyurethan, die sich im Brechungsindex vom Lichtleiter unterscheidet. Ohne die Cladding Schicht würde der Brechungsindexunterschied Lichtleiter zu Luft die Reflexion an der Grenzschicht des Lichtleiters bestimmen, mit Cladding-Schicht bestimmt das Verhältnis der Brechungsindices von Lichtleiter zur Cladding-Schicht das entsprechende Reflexionsverhalten. Der Unterschied im Brechungsindex zwischen Lichtleiter und Cladding-Schicht ist insbesondere wichtig, wenn der Lichtleitergebogen wird, da der Winkel, bis zu dem eine Reflexion des Lichtes an der Grenzschicht erfolgt, abhängig vom Unterschied im Brechungsindices ist. Der Kern eines Lichtleiters hat bevorzugt einen Brechungsindex von mehr als 1,45, weiter bevorzugt von mehr als 1,5. Auf diese Weise wir das Licht in den Radien gehalten und tritt auch bei Krümmung des Lichtleiters nicht aus. Je höher die Differenz im Brechungsindex zwischen Lichtleiter und Cladding-Schicht ist, um so enger können die Lichtleiter gebogen werden. Bevorzugt ist der Unterschied der Brechungsindices zwischen Lichtleiter und Cladding-Schicht mehr als 0,1, weiter bevorzugt mehr als 0,15, und besonders bevorzugt mehr als 0,2.

In einer weiteren Ausführungsform kann das erfindungsgemäße TPU in einem Kombinationsleiter verwendet werden, der einen zentralen elektrischen Leiter, zum Beispiel einen Kupferdraht umfasst, welcher von einer Schicht aus erfindungsgemäßen, lichtleitendem TPU ringförmig umgeben ist, wobei der TPU-Ring seinerseits von einer Cladding-Schicht umgeben ist. In einer weiter bevorzugten Ausführungsform ist die Cladding-Schicht von einer Beschichtung zum Schutz vor mechanischen Beschädigungen umgeben. Derartige Aufbauten eignen sich bevorzugt zur Übertragung von Signalen in Automobilen.

Insbesondere können die erfindungsgemäßen Mataerialien als Lichtleiter Anwendung im Automobilbau finden, wo Übertragungswege von 3 bis 5 m vorliegen. Auch in Energieversorgungsanlagen mit stark beweglichen Teilen ist eine Anwendung, insbesondere bei Übertragungslängen von 3 bis 5 m denkbar. Die flexiblen, transparenten, lichtleitenden TPU können dabei zur Ummantelung von flexiblen Energiekabeln eingesetzt werden. Im Falle von Automobilanwendungen ist sowohl eine präventive Detektierung von Schäden an Sicherheitsleitungen (ABS-Kabel, Bremsschläuche) denkbar, als auch eine schnelle, störspannungsunabhängige Datenübertragung zu Steuerungs- und Messzwecken. Eine weitere Anwendung ist beispielsweise die flexible Instrumentenhintergrundbeleuchtung.

Als Cladding-Schicht eignen sich bevorzugt Fluorpolymere, flourhaltige Elastomere und die aus US-A-4836646 bekannten Polyurethansiloxan-Copolymere.

Beispiele

1. Komponenten

In den folgenden Beispielen werden folgende Komponenten verwendet:

Tabelle 1

| Warenname | Bezeichnung | Chemische Zusammensetzung |
|---|---|---|
| PTHF | B1 | Polytetrahydrofuran, zahlenmittleres Molekulargewicht 1000 g/mol |
| B14 | KV1 | 1,4-Butandiol |
| 4,4'-MDI | A1 | Diphenylmethandiisocyanat |
| Antioxidanz | E1 | Irganox 1125, (Phenolisches Antioxidanz) |
| Hydrolysestabilisator | E2 | Polymeres Carbodiimid als Hydrolysestabilisator |
| Polyesterdiol 1 | B2 | Hexandiol-Butandiol-Adipat, zahlenmittleres Molekulargewicht 2000 g/mol |
| H12MDI | A2 | Perhydriertes Diphenylmethandiisocyanat |
| SDO | D1 | Zinndioctoat als Katalysator |
| TBOT | D2 | Titankatalysator |
| Polyesterdiol 2 | B3 | Butandiol-Adipat, zahlenmittleres Molekulargewicht 1000 g/mol |

2. Bestimmungsmethoden

Aus dem thermoplastischen Polyurethan wurden als Lichtleiter Stränge mit einem Durchmesser von 2 mm extrudiert.

Zur Bestimmung der Lichtdurchlässigkeit wurden die Stränge am Einkoppelende, d. h. dort wo das Licht in den Lichtleiter eingestrahlt wurde, über eine Verbindungshülse mit einer LED (light emission diod) vom Typ "Superhell weiß" (Durchmesser 5 mm) bzw. mit einer Laserdiode (LD) verbunden. Dabei ist die Verbindungsstelle so ausgestaltet, dass die Laserdiode senkrecht auf die senkrecht zur Achse des Lichtleiters geschnittene Fläche trifft. Das Ende des Lichtleiters wird ebenfalls senkrecht zur Lichtleiterachse abgeschnitten. So wurde das Lichtsignal der LED bzw. der LD in die Teststücke, d.h. Lichtleiter, eingekoppelt, d.h. eingestrahlt. Bei dieser, d.h. direkter Einstrahlung der Lichtsignale der LED bzw. LD wurde mit einem Miniaturspektrometer getSpec 2048 im Bereich zwischen 380 nm und 780 nm mit folgender Lichtleistung bzw. Beleuchtungsstärke gemessen:

LED (weiß): Lichtleistung = 47 $\mu$W

Beleuchtungsstärke = 1000 Lux

LD (rot): Lichtleistung = 450 $\mu$W

Beleuchtungsstärke = 3450 Lux

Am Ende der zu untersuchenden Musterstücke, d.h. die Lichtleiter aus thermoplastischem Polyurethan mit einem Durchmesser von 2mm, befand sich ein optischer Empfänger, der über einen kommerziellen Lichtwellenleiter (Durchmesser 200 $\mu$m/mittig in der optischen Empfängerhülle gelegen) mit dem Spektrometer getSpec 2048 verbunden war. Die vermessenen Lichtleiter hatten eine Länge von bis zu 8 m.

Die Gesamtopazität wurde wie folgt bestimmt:

Die Farbe der zu messenden Probe wird einmal mit einer Lichtfalle als Hintergrund und einmal mit einer weißen Kachel als Hintergrund in Reflektion unter Ausschluss des Glanzes mit einem Farbmessgerät gemessen. Die Helligkeitswerte (L-Wert nach DIN 6174) werden ins Verhältnis gesetzt und als Opazität in % angegeben.

Verwendet wird ein Farbmessgerät "UltraScan" der Firma HunterLab, bzw. ein gleichwertiges Gerät. Die Proben werden nach AA E-10-132-002 hergestellt. Das Farbmessgerät wird bei Erreichen der Betriebstemperatur standardisiert, im Allgemeinen 30 Minuten, und unter folgenden Parametern gefahren:

| | |
|---|---|
| Mode: | RSEX (Reflexion Specular Excluded), Reflexion ohne Glanz, unter Öffnung der Glanzfalle |
| Area View: | large |
| Port Size: | 25,4 |
| UV-Filter: | out |

Die Berechnung der Gesamtopazität erfolgt nach folgender Formel:

$$\text{Opazität} = (\text{L-Wert-Schwarz}/\text{L-Wert-Weiß}) \times 100\%$$

Demnach bedeutet ein Opazitätswert von 0 % völlige Transparenz der Probe und ein Wert von 100 % eine völlige Undurchsichtigkeit.

Der Brechungsindex wurde mit einem Refraktometer mittels Licht eines Tageslichtspektrums bestimmt.

3. Allgemeine Verfahrensvorschrift zur Herstellung der TPU

Die Teststränge wurden durch Extrusion mit Durchmessern von ca. 2 mm unter folgenden Bedingungen durchgeführt:

Tabelle 2

| | |
|---|---|
| Extruder: | gleichläufiger Doppelschneckenextruder, APV MP19 |
| Temperaturprofil: | HZ1 (Einzug) 175 °C bis 185 °C |
| | HZ2 180 °C bis 190 °C |
| | HZ3 185 °C bis 195 °C |
| | HZ4 185 °C bis 195 °C |
| | HZ5 (Düse) 180 °C bis 190 °C |
| Schneckendrehzahl: | 100 U/min |
| Druck: | ca. 10 bis 30 bar |
| Strangkühlung: | Wasserbad (10 °C) |

4. Spezielle Beispiele

Unter Verwendung der oben identifizierten Ausgangskomponenten wurden nach dem angegebenen Verfahren folgende TPU hergestellt (Angaben in g, wenn nicht anderes angegeben).

Tabelle 3

| TPU | B1 | B2 | B3 | A1 | A2 | KV1 | E1 | E2 | D1 | D2 |
|---|---|---|---|---|---|---|---|---|---|---|
| TPU1 | 1000 | | | 650 | | 144 | 18 | | 2 ppm | |
| TPU2 | | | 1000 | 500 | | 88 | | 8 | 1 ppm | |
| TPU3 | | 1000 | | | 977,1 | 289,25 | | 8 | 200 ppm | |
| TPU4 | 1000 | | | | 1181 | 319,73 | | | | 25 ppm |

Alle Angaben in der Tabelle, die keine Einheit haben, sind in Gramm [g] angegeben. TPU1, TPU2 und TPU3 sind Referenzbeispiele. Messung der möglichen Übertragungslänge Nach dem oben angegebenen Verfahren wurde Licht einer LED und einer LD im sichtbaren Bereich des Spektrums durch Musterstränge übertragen. Dabei wurde die maximale Übertragungslänge, bei der noch eine anwendungsgerechte Impulsübertragung möglich ist, detektiert bzw. ermittelt.

Tabelle 4

| TPU | RÜ (LED) | RÜ (LD) | |
|-----|----------|---------|---|
| TPU1 | 1,5 | 2,6 | |
| TPU2 | 1,4 | 2,5 | |
| TPU3 | 2,9 | 4,0 | |
| TPU4 | 4,0 | 6,0 | |
| RÜ: relative Übertragungslänge [m], bei der noch eine anwendungsgerechte Impulsübertragung möglich ist | | | |

Es wurden folgende Lichtquellen verwendet:

LED (weiß)        47 $\mu$W Lichtleistung, Beleuchtungsstärke 1000 Lux
Laserdiode LD (rot)    450 $\mu$W Lichtleistung, Beleuchtungsstärke 3450 Lux

**Patentansprüche**

1.  Lichtleiter auf Basis eines lichtleitenden thermoplastischen Polyurethans, erhältlich aus

    A) einem Diisocyanat
    B) einem Polyol
    C) einem Isocyanat-reaktiven Kettenverlängerer, **dadurch gekennzeichnet, dass** im thermoplastischen Polyurethan

    a) der Gehalt an Aromaten und konjugierten $\pi$-Elektronen-Systemen maximal 40 Gew.-% bezogen auf das thermoplastische Polyurethan inklusive gegebenenfalls anwesender Additive beträgt
    b) der Brechungsindex des thermoplastischen Polyurethans mindestens 1,50 beträgt und
    c) die Gesamtopazität kleiner als 10 % beträgt

    wobei das Diisocyanat A) 1-Isocyanato-4-[(4-isocyanatocyclohexyl)-methyl]-cyclohexan ist, das Polyol ein Polytetrahydrofuran mit einem zahlenmittleren Molekulargewicht von 600 g/mol bis 2000 g/mol und der Kettenverlängerer Propan-1,3,-diol und/oder Butan-1,4-diol ist.

2.  Lichtleiter nach Anspruch 1 wobei der Lichtleiter ein Strang, ein Schlauch oder eine Faser ist.

3.  Lichtleiter nach einem der vorhergehenden Ansprüche, **dadurch gekennzeichnet, dass** der Lichtleiter von einer Cladding-Schicht umgeben ist.

4.  Lichtleiter nach dem vorhergehenden Anspruch, **dadurch gekennzeichnet, dass** der Lichtleiter mit der Cladding-Schicht weiterhin mit einer äußeren Schicht zum Schutz vor mechanischen Beschädigungen umgeben ist.

5.  Lichtleiter nach Anspruch 3 oder 4, **dadurch gekennzeichnet, dass** die Cladding-Schicht aus Fluorpolymer oder flourhaltigem Elastomer besteht.

6.  Lichtleiter gemäß wenigstens einem der vorhergehenden Ansprüche, **dadurch gekennzeichnet, dass** der Kettenverlängerer C 1,4-Butandiol ist.

7.  Verwendung des lichtleitenden thermoplastischen Polyurethans, erhältlich aus

A) einem Diisocyanat
B) einem Polyol
C) einem Isocyanat-reaktiven Kettenverlängerer, **dadurch gekennzeichnet, dass** im thermoplastischen Polyurethan

a) der Gehalt an Aromaten und konjugierten $\pi$-Elektronen-Systemen maximal 40 Gew.-% bezogen auf das thermoplastische Polyurethan inklusive gegebenenfalls anwesender Additive beträgt
b) der Brechungsindex des thermoplastischen Polyurethans mindestens 1,50 beträgt und
c) die Gesamtopazität kleiner als 10 % beträgt

wobei das Diisocyanat A) 1-Isocyanato-4-[(4-isocyanatocyclohexyl)-methyl]-cyclohexan ist, das Polyol ein Polytetrahydrofuran mit einem zahlenmittleren Molekulargewicht von 600 g/mol bis 2000 g/mol und der Kettenverlängerer Propan-1,3,-diol und/oder Butan-1,4-diol ist als lichtleitendes Element in Lichtleitern.

8. Verfahren zur Herstellung von Lichtleitern auf der Basis von lichtleitenden thermoplastischen Polyurethanen, **dadurch gekennzeichnet, dass** wenigstens ein organisches Diisocyanat A), wenigstens ein vorzugsweise lineares, Hydroxyl-terminiertes Polyol B und wenigstens ein kurzkettiger Kettenverlängerer C) auf Basis eines Diols zur Reaktion gebracht werden, **dadurch gekennzeichnet, dass**

- das Äquivalenzverhältnis von NCO-Gruppen zur Summe der Isocyanat-reaktiven Gruppen 0,9 : 1,0 bis 1,2 : 1,0, vorzugsweise 0,95 : 1,0 bis 1,10 : 1,0 beträgt
- keine Streuzentren eingetragen werden
- keine oder im Wesentlichen keine UV- und/oder VIS-Strahlung absorbierenden Zusätze eingetragen werden.

wobei das Diisocyanat A) 1-Isocyanato-4-[(4-isocyanatocyclohexyl)-methyl]-cyclohexan ist, das Polyol ein Polytetrahydrofuran mit einem zahlenmittleren Molekulargewicht von 600 g/mol bis 2000 g/mol und der Kettenverlängerer Propan-1,3,-diol und/oder Butan-1,4-diol ist.

9. Verfahren gemäß Anspruch 8, **dadurch gekennzeichnet, dass** zur Herstellung des Polyurethans keine Hilfsmittel verwendet werden.

**Claims**

1. An optical conductor based on an optically conductive thermoplastic polyurethane, obtainable from

A) a diisocyanate
B) a polyol
C) an isocyanate-reactive chain extender, wherein, in the thermoplastic polyurethane,

a) the content of aromatics and of conjugated n-electron systems is at most 40% by weight based on the thermoplastic polyurethane inclusive of any additives present,
b) the refractive index of the thermoplastic polyurethane is at least 1.50 and
c) total opacity is smaller than 10%,

where the diisocyanate A) is 1-isocyanato-4-[(4-isocyanatocyclohexyl)methyl]cyclohexane, the polyol is a polytetrahydrofuran with number-average molar mass from 600 g/mol to 2000 g/mol and the chain extender is 1,3-propanediol and/or 1,4-butanediol.

2. The optical conductor according to claim 1, where the optical conductor is a strand, or tubing, or a fiber.

3. The optical conductor according to any of the preceding claims, wherein a cladding layer surrounds the optical conductor.

4. The optical conductor according to the preceding claim, wherein, for protection from mechanical damage, an exterior layer moreover surrounds the optical conductor with the cladding layer.

5. The optical conductor according to claim 3 or 4, wherein the cladding layer consists of fluoropolymer or of fluorine-containing elastomer.

6. The optical conductor according to at least one of the preceding claims, wherein the chain extender C is 1,4-butanediol.

7. The use, as optically conductive element in optical conductors, of the optically conductive thermoplastic polyurethane, obtainable from

A) a diisocyanate
B) a polyol
C) an isocyanate-reactive chain extender, wherein, in the thermoplastic polyurethane,

a) the content of aromatics and of conjugated n-electron systems is at most 40% by weight based on the thermoplastic polyurethane inclusive of any additives present,
b) the refractive index of the thermoplastic polyurethane is at least 1.50 and
c) total opacity is smaller than 10%,

where the diisocyanate A) is 1-isocyanato-4-[(4-isocyanatocyclohexyl)methyl]cyclohexane, the polyol is a polytetrahydrofuran with number-average molar mass from 600 g/mol to 2000 g/mol and the chain extender is 1,3-propanediol and/or 1,4-butanediol.

8. A process for the production of optical conductors based on optically conductive thermoplastic polyurethanes, which comprises reacting at least one organic diisocyanate A), at least one preferably linear hydroxy-terminated polyol B, and at least one short-chain chain extender C) based on a diol, which comprises

- using an equivalence ratio of NCO groups to the entirety of the isocyanate-reactive groups of from 0.9:1.0 to 1.2:1.0, preferably from 0.95:1.0 to 1.10:1.0
- introducing no scattering centers
- and introducing no, or in essence no, additions which absorb UV radiation and/or VIS radiation, where the diisocyanate A) is 1-isocyanato-4-[(4-isocyanatocyclohexyl)methyl]cyclohexane, the polyol is a polytetrahydrofuran with number-average molar mass from 600 g/mol to 2000 g/mol and the chain extender is 1,3-propanediol and/or 1,4-butanediol.

9. The process according to claim 8, wherein production of the polyurethane uses no auxiliaries.

**Revendications**

1. Conducteur de lumière à base d'un polyuréthane thermoplastique conducteur de lumière, pouvant être obtenu à partir de :

A) un diisocyanate,
B) un polyol,
C) un allongeur de chaînes réactif avec les isocyanates, **caractérisé en ce que**, dans le polyuréthane thermoplastique,

a) la teneur en composés aromatiques et systèmes à électrons $\pi$ conjugués est d'au plus 40 % en poids, par rapport au polyuréthane thermoplastique, y compris des additifs éventuellement présents,
b) l'indice de réfraction du polyuréthane thermoplastique est d'au moins 1,50, et
c) l'opacité totale est inférieure à 10 %,

le diisocyanate A) étant le 1-isocyanato-4-[(4-isocyanatocyclohexyl)-méthyl]-cyclohexane, le polyol étant un polytétrahydrofurane ayant un poids moléculaire moyen en nombre de 600 g/mol à 2 000 g/mol, et l'allongeur de chaînes étant le propane-1,3-diol et/ou le butane-1,4-diol.

2. Conducteur de lumière selon la revendication 1, dans lequel le conducteur de lumière est un cordon, un tuyau ou une fibre.

3. Conducteur de lumière selon l'une quelconque des revendications précédentes, **caractérisé en ce que** le conducteur de lumière est entouré par une couche de revêtement.

4. Conducteur de lumière selon la revendication précédente, **caractérisé en ce que** le conducteur de lumière comprenant la couche de revêtement est en outre entouré par une couche extérieure pour la protection contre les dégâts mécaniques.

5. Conducteur de lumière selon la revendication 3 ou 4, **caractérisé en ce que** la couche de revêtement est constituée par un polymère fluoré ou un élastomère contenant du fluor.

6. Conducteur de lumière selon au moins l'une quelconque des revendications précédentes, **caractérisé en ce que** l'allongeur de chaînes C est le 1,4-butanediol.

7. Utilisation du polyuréthane thermoplastique conducteur de lumière, pouvant être obtenu à partir de :

    A) un diisocyanate,
    B) un polyol,
    C) un allongeur de chaînes réactif avec les isocyanates, **caractérisée en ce que**, dans le polyuréthane thermoplastique,

        a) la teneur en composés aromatiques et systèmes à électrons $\pi$ conjugués est d'au plus 40 % en poids, par rapport au polyuréthane thermoplastique, y compris des additifs éventuellement présents,
        b) l'indice de réfraction du polyuréthane thermoplastique est d'au moins 1,50, et
        c) l'opacité totale est inférieure à 10 %,

le diisocyanate A) étant le 1-isocyanato-4-[(4-isocyanatocyclohexyl)-méthyl]-cyclohexane, le polyol étant un polytétrahydrofurane ayant un poids moléculaire moyen en nombre de 600 g/mol à 2 000 g/mol, et l'allongeur de chaînes étant le propane-1,3-diol et/ou le butane-1,4-diol, en tant qu'élément conducteur de lumière dans des conducteurs de lumière.

8. Procédé de fabrication de conducteurs de lumière à base de polyuréthanes thermoplastiques conducteurs de lumière, **caractérisé en ce qu'**au moins un diisocyanate organique A), au moins un polyol à terminaison hydroxyle de préférence linéaire B) et au moins un allongeur de chaînes à chaîne courte C) à base d'un diol sont mis en réaction, **caractérisé en ce que**

    - le rapport équivalent entre les groupes NCO et la somme des groupes réactifs avec les isocyanates est de 0,9:1,0 à 1,2:1,0, de préférence de 0,95:1,0 à 1,10:1,0,
    - aucun centre de diffusion n'est introduit,
    - aucun ou essentiellement aucun additif absorbant le rayonnement UV et/ou VIS n'est introduit,

le diisocyanate A) étant le 1-isocyanato-4-[(4-isocyanatocyclohexyl)-méthyl]-cyclohexane, le polyol étant un polytétrahydrofurane ayant un poids moléculaire moyen en nombre de 600 g/mol à 2 000 g/mol, et l'allongeur de chaînes étant le propane-1,3-diol et/ou le butane-1,4-diol.

9. Procédé selon la revendication 8, **caractérisé en ce qu'**aucun adjuvant n'est utilisé pour la fabrication du polyuréthane.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4836646 A
- US 20080117639 A1
- WO 9409048 A1
- US 4915473 A
- EP 1197505 A1
- EP 1197505 A
- US 3620905 A